# EUROPÄISCHE PATENTSCHRIFT

(11) **EP 3 154 765 B1**
(45) Veröffentlichungstag und Bekanntmachung des Hinweises auf die Patenterteilung: **22.08.2018**
(21) Anmeldenummer: 15734079.5
(22) Anmeldetag: 15.06.2015
(51) Int. Cl.: B29C 65/16, B01D 29/01, B29L 31/14, B29K 25/00

(54) **VORRICHTUNG MIT EINEM GEHÄUSEUNTERTEIL UND MIT EINEM FILTER SOWIE VERFAHREN ZUR HERSTELLUNG**
DEVICE HAVING A LOWER HOUSING PART AND HAVING A FILTER, AND PRODUCTION METHOD
DISPOSITIF COMPRENANT UNE PARTIE INFÉRIEURE DE BOÎTIER ET UN FILTRE, ET PROCÉDÉ DE PRODUCTION CORRESPONDANT

(30) Priorität: 16.06.2014 DE 102014108405
(43) Veröffentlichungstag der Anmeldung: 19.04.2017
(73) Patentinhaber: Sartorius Stedim Biotech GmbH, 37079 Göttingen (DE)
(72) Erfinder: FATHERAZI, Shahmir, 52078 Aachen (DE); LOEWE, Thomas, 37077 Göttingen (DE); HANDT, Sebastian, 37085 Göttingen (DE)
(74) Vertreter: Schneider, Peter Christian
(86) Internationale Anmeldenummer: PCT/EP2015/063327
(87) Internationale Veröffentlichungsnummer: WO 2015/193234

(56) Entgegenhaltungen:
- DE-A1- 10 058 251
- DE-A1- 10 211 782
- DE-A1- 10 256 565

## Beschreibung

### Gebiet der Erfindung

Die Erfindung betrifft eine Vorrichtung mit einem Gehäuseunterteil und mit einem Filter, wobei der Filter mindestens in einem Teil des Randbereiches auf seiner dem Gehäuseunterteil zugewandten Unterseite durch Laserschweißen dicht mit dem Gehäuseunterteil verbunden ist, und wobei der Filter als eine Filtermembran ausgebildet ist, die an der Unterseite durch ein Verstärkungsvlies verstärkt ist.

Die Erfindung betrifft weiterhin ein Verfahren zum Verbinden eines Gehäuseunterteils mit einem als eine Filtermembran (5) ausgebildeten Filter, der an seiner Unterseite durch ein Verstärkungsvlies verstärkt ist und einen umlaufenden Randbereich aufweist, wobei der Filter mit seinem Randbereich auf einen Auflagerand des Gehäuseunterteils, das mindestens im Bereich seines Auflagerandes zum Filter hin Laserlicht absorbierend ausgebildet ist, aufgesetzt und in einer Spannvorrichtung mit einem transparenten Niederhalter zusammengepresst wird, um anschließend den Randbereich des Filters durch Laserschweißen dicht mit dem Auflagerand des Gehäuseunterteils zu verbinden.

### Stand der Technik

Aus der DE 102 11 782 A1 ist eine Vorrichtung mit einem Gehäuseunterteil und mit einem Filter bekannt, wobei der Filter mit einem umlaufenden Randbereich auf seiner dem Gehäuseunterteil zugewandten Unterseite durch Laserschweißen dicht mit einem Auflagerand des Gehäuseteils verbunden ist. Dabei ist das Gehäuseteil aus einem thermoplastischen Kunststoff ausgebildet, der Laserlicht adsorbiert, während der Filter aus einem für Laserlicht transparenten Polymervlies ausgebildet ist. Zum Verbinden von Gehäuseunterteil und Filter wird der Filter mit seinem Randbereich auf einen Auflagerand des Gehäuseunterteils aufgesetzt und in einer Spannvorrichtung mit einem transparenten Niederhalter zusammengepresst, wobei der Randbereich des Filters durch Laserschweißen dicht mit dem Auflagerand des Gehäuseunterteils verbunden wird.
Nachteilig dabei ist, dass bei dieser Vorrichtung die Kunststoffe so ausgewählt sein müssen, dass nur eine unwesentliche Aufschmelzung des Filtermaterials bzw. des Vliesmaterials eintritt und die Schmelzpunkte und die Absorptionskoeffizienten der Materialien entsprechend aufeinander abgestimmt sein müssen. Weiterhin nachteilig ist, dass durch die einseitige Durchdringung des Filtermaterials mit der Schmelze des Gehäuseunterteils die Verbindung der beiden Materialien nur bedingt sicher und dicht ist. Da der gesamte Filter aus einem Polymervlies ausgebildet ist, sind einerseits mikroporöse Membranfilter ausgeschlossen und andererseits sind nicht alle Polymervliese für die durchzuführenden Filtrationen geeignet.
Weiterhin ist aus der DE 102 56 565 A1 ein Verfahren zum Befestigen eines Filtermaterials auf einer Halteeinrichtung bekannt, wobei die Anordnung der oben unter DE 102 11 782 A1 beschriebenen Vorrichtung entspricht. Bei dem Filtermaterial handelt es sich um ein Polymervlies, welches mit einem für einen Laser durchlässigen Harz, beispielsweise Acrylharz, imprägniert ist.
Die Vorrichtung und das Verfahren weisen die oben beschriebenen Nachteile auf.
Weiterhin ist aus der DE 100 58 251 A1 eine Vorrichtung und ein Verfahren bekannt, bei dem ein Gehäuseunterteil und ein Filter durch Laserschweißen dicht miteinander verbunden werden. Dabei ist der Filter als eine Filtermembran ausgebildet, die an der Unterseite durch ein Stützgewebe verstärkt ist. Hierbei soll durch Eindringen von flüssigem Kunststoff des Gehäuseunterteils in das Stützgewebe eine formschlüssige Verbindung des Filters mit dem Grundkörper erfolgen, wobei der Kunststoff des Grundkörpers Laserlicht in Wärme umwandelnde Stoffe (Absorber) aufweist und Laserlicht absorbierend ausgebildet ist.
Nachteilig auch bei dieser bekannten Vorrichtung und Verfahren ist, dass das Stützgewebe gerade nicht geschmolzen werden darf, damit der flüssige Kunststoff des Grundkörpers in das Stützgewebe eindringen kann. Durch die an sich zum Laserschweißen unverträglichen Kunststoffe erfolgt auch hier nur ein einseitiges Eindringen in das Stützgewebe, so dass die Verbindung relativ schwach ausgebildet ist.
Weiterhin ist aus der DE 10 2006 054 936 A1 ein temperaturinduziertes Klebschweißverfahren zum Verbinden unverträglicher Kunststoffe bekannt. Bei diesem bekannten Verfahren wird zwischen den zu verbindenden Materialien ein Klebschweißzusatzstoff aufgebracht, der lichtadsorbierende Eigenschaften aufweist.
Nachteilig dabei ist, dass der Klebschweißzusatzstoff mit einem der zu verbindenden Materialien verträglich im Sinne von verschweißbar sein muss.
Schließlich ist aus der US 5 840 147 A ein Verfahren zum Laserschweißen mit einem Substrat zwischen den beiden zu schweißenden Teilen bekannt. Das Substrat schmilzt während des Schweißvorganges und verbindet sich mit den zu schweißenden Teilen. Dabei muss entweder das Substrat oder eines der zu schweißende Teile einen Absorber enthalten.
Nachteilig bei diesem bekannten Verfahren ist, dass es nur für zum Laserschweißen geeignete Materialien angewendet werden können.

### Aufgabenstellung

Es ist die Aufgabe der vorliegenden Erfindung, die bekannten Vorrichtungen und Verfahren so zu verbessern, dass sie auch zum Verbinden von zum direkten Laserschweißen unverträglichen Kunststoffen geeignet sind. Dabei soll die Verbindung kostengünstig, einfach, sicher und dicht sein.

### Darlegung der Erfindung

Die Aufgabe bezüglich der Vorrichtung wird durch die Merkmale des Anspruches 1 gelöst, wobei das Verstärkungsvlies schmelzbar ist, wobei das Verstärkungsvlies der Filtermembran und das Gehäuseunterteil aus zum direkten Laserschweißen unverträglichen Kunststoffen ausgebildet sind, wobei zwischen dem schmelzbaren Verstärkungsvlies und dem Gehäuseunterteil ein hochschmelzendes Vlies, das die Filtermembran mit einem Auflagerand des Gehäuseunterteils verbindet, angeordnet ist, und wobei das Gehäuseunterteil mindestens in einem Teil des Auflagerandes zur Filtermembran hin Laserlicht absorbierend ausgebildet ist.
Dadurch, dass zwischen dem schmelzbaren Verstärkungsvlies und dem Gehäuseunterteil ein hochschmelzendes Vlies, das die Filtermembran mit dem Auflagerand des Gehäuseunterteils dicht verbindet, angeordnet ist, wird beim Laserschweißen sowohl auf der einen Seite das Verstärkungsvlies und auf der anderen Seite der Auflagebereich des Gehäuseunterteils geschmolzen oder mindestens angeschmolzen, während das hochschmelzende Vlies nicht geschmolzen wird und seine Struktur im Wesentlichen beibehält, so dass die anliegenden Kunststoffschichten jeweils von ihrer Seite her in die Struktur des Vlieses eindringen und eine feste, dichte und kostengünstige Verbindung zwischen der Filtermembran mit dem schmelzbaren Verstärkungsvlies und Gehäuseunterteil entsteht.
Im Sinne der vorliegenden Erfindung soll unter einem hochschmelzenden Vlies ein Vlies aus einem Kunststoff verstanden werden, der bei einer Schweißtemperatur, bei der die anliegenden Kunststoffschichten zum Schmelzen gebracht werden, seine Struktur im Wesentlichen beibehält, so dass die angeschmolzenen Kunststoffe der benachbarten Schichten in den Vlies eingedrückt werden können und nach dem Abkühlen eine feste und dichte Verbindung entsteht. Damit durch den Laserstrahl beim Laserschweißen die notwendige Prozesshitze an der Verbindungsstelle erzeugt werden kann, muss der Verbindungsstelle benachbart Laserlicht absorbiert werden können.
Gemäß einer bevorzugten Ausführungsform der Erfindung ist dem Gehäuseunterteil eine Laserlicht absorbierende Schicht zur Filtermembran hin vorgelagert. Diese absorbierende Schicht kann dabei als eine Absorptionsfolie ausgebildet sein.
Nach einer weiteren bevorzugten Ausführungsform der Erfindung ist das Gehäuseunterteil aus einem Kunststoff ausgebildet, der einen Laserlicht absorbierenden Absorber enthält. Dabei kann der Absorber als sogenanntes Masterbatch in den Kunststoff des Gehäuseunterteils eingearbeitet sein.

Gemäß einer bevorzugten Ausführungsform der Erfindung ist das hochschmelzende Vlies aus Polyetheretherketon (PEEK) oder Polyphenylensulfid (PPS) oder Polyamide (PA) oder Polyetherimid (PEI) oder Polyethylenterephthalat (PET) ausgebildet. Entsprechend kann das Verstärkungsvlies der Filtermembran aus Polypropylen (PP) ausgebildet sein, dessen Schmelzbereich niedriger liegt als der des hochschmelzenden Vlieses. Entsprechend einer bevorzugten Ausführungsform der Erfindung kann dabei das Gehäuseunterteil aus Polystyrol (PS) ausgebildet sein.

Die Aufgabe bezüglich des Verfahrens wird durch die Merkmale des Anspruches 8 gelöst, wobei zwischen dem Verstärkungsvlies, das schmelzbar ist, und dem Gehäuseunterteil ein hochschmelzendes Vlies eingelegt wird und wobei während des Laserschweißens die zu beiden Seiten des Vlieses anliegenden Schichten, die aus zum direkten Laserschweißen unverträglichen Kunststoffen ausgebildet sind, angeschmolzen und in das Vlies eingedrückt werden.
Anders als bei dem bekannten Verfahren wird bei dem erfindungsgemäßen Verfahren der Randbereich des Filters oder, soweit vorhanden, das Verstärkungsvlies geschmolzen und wie auch die auf der anderen Seite des Vlieses angeordnete Schicht des Gehäuseunterteils in zumindest angeschmolzenem Zustand in das hochschmelzende Vlies, das seine Struktur während des Laserschweißens im Wesentlichen beibehält, eingedrückt, so dass nach dem Abkühlen eine feste und dichte Verbindung der miteinander zu verbindenden Schichten über das hochschmelzende Vlies entsteht.
Gemäß einer bevorzugten Ausführungsform der Erfindung wird bei für Laserlicht transparentem Gehäuseunterteil dem Gehäuseunterteil eine Laserlicht absorbierende Schicht zum Filter hin vorgelagert.
Nach einer weiteren bevorzugten Ausführungsform der Erfindung wird als Laserlicht absorbierende Schicht eine Absorptionsfolie zum Filter hin vorgelagert. Dies hat den Vorteil, dass relativ einfach und kostengünstig eine Absorptionsschicht auf das für Laserlicht transparente Gehäuseunterteil aufgebracht werden kann.
Bevorzugte Ausführungsformen sind Gegenstand der abhängigen Ansprüche.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine Seitenansicht im Schnitt und Explosionsdarstellung einer Vorrichtung mit Gehäuseunterteil und einem Filter;
- Figur 2:: eine Seitenansicht im Schnitt der Vorrichtung von Figur 1 mit gestrichelt dargestellten Niederhalter einer Laserschweißvorrichtung und einem gestrichelt dargestellten Laserstrahl;
- Figur 3:: eine Seitenansicht der fertigen Vorrichtung von Figur 2;
- Figur 4:: eine Seitenansicht im Schnitt einer Filtervorrichtung, bestehend aus der Vorrichtung von Figur 3 und einem aufgesetzten und verschweißten Gehäuseoberteil;
- Figur 5:: eine Seitenansicht im Schnitt und Explosionsdarstellung einer weiteren Vorrichtung mit einem Gehäuseunterteil aus einem Laserlicht absorbierenden Kunststoff;
- Figur 6:: eine Seitenansicht im Schnitt der Vorrichtung von Figur 5 mit gestrichelt dargestelltem-Niederhalter einer Schweißvorrichtung und gestrichelt dargestelltem Laserstrahl;
- Figur 7:: eine Seitenansicht im Schnitt der Vorrichtung von Figur 6 im verschweißten Zustand;
- Figur 8:: eine Seitenansicht im Schnitt der Vorrichtung von Figur 7 mit aufgesetztem und verschweißtem Gehäuseoberteil; und
- Figur 9:: eine Seitenansicht im Schnitt und Ausriss in vergrößerter Darstellung eines Filters, bestehend aus einer Filtermembran mit Verstärkungsvlies an der Unterseite der Filtermembran.

### Beschreibung bevorzugter Ausführungsformen

Eine Vorrichtung 1 besteht im Wesentlichen aus einem Gehäuseunterteil 2, einem Vlies 3 und einem Filter 4.

Der Filter 4 weist eine Filtermembran 5 auf, die an ihrer Unterseite durch ein schmelzbares (durch Laserschweißen) Verstärkungsvlies 6 verstärkt ist. Zwischen dem Filter 4 und dem Gehäuseunterteil 2 ist das hochschmelzende Vlies 3 angeordnet.

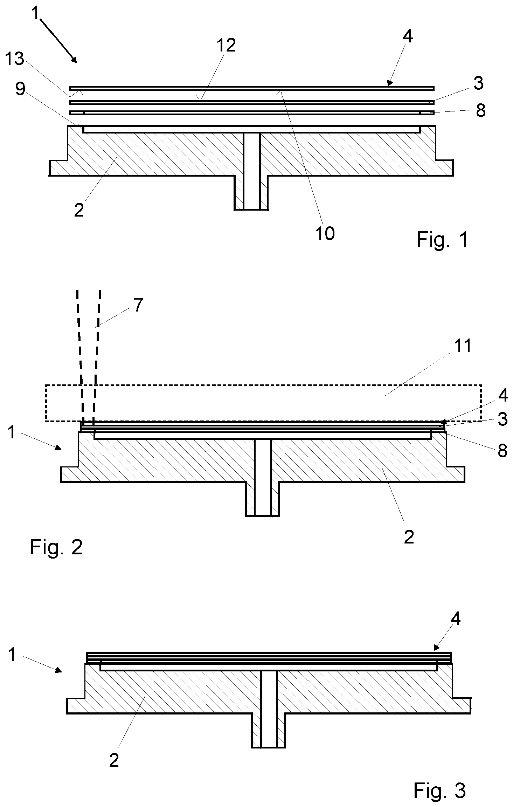

Gemäß dem Ausführungsbeispiel der Figuren 1 bis 4 ist das Gehäuseunterteil 2 für Laserlicht 7 transparent ausgebildet. Entsprechend ist zwischen dem Vlies 3 und dem Gehäuseunterteil 2 eine Laserlicht 7 absorbierende Schicht angeordnet, die als eine Absorptionsfolie 8 ausgebildet ist.

Zur Herstellung der Vorrichtung 1 wird auf dem Auflagerand 9 des Gehäuseunterteils 2 die Absorptionsfolie 8 aufgesetzt. Auf die Absorptionsfolie 8 wird das Vlies 3 ausgesetzt. Auf das Vlies 3 wird der Filter 4 an seiner Unterseite 10 so aufgesetzt, dass das Verstärkungsvlies 6 des Filters 4 auf der Oberseite 12 des Vlieses 3 aufliegt.

Die Vorrichtung 1 wird in einer Laserschweißvorrichtung durch deren für das Laserlicht 7 transparenten Niederhalter 11 zusammengepresst. Der Randbereich 13 des Filters 4 wird durch Laserschweißen dicht mit dem Auflagerand 9 des Gehäuseunterteils 2 verbunden. Dabei werden durch das Laserlicht 7 die auf beiden Seiten des Vlieses 3 angeordneten Schichten, nämlich das Verstärkungsvlies 6 einerseits und der Auflagerand 9 des Gehäuseunterteils 2 andererseits, angeschmolzen und in das Vlies 3 eingedrückt.

Auf die fertige Vorrichtung 1 wird dann in bekannter Weise ein Gehäuseoberteil 14 aufgesteckt und mit diesem in bekannter Weise verschweißt. Damit bildet die Vorrichtung 1 zusammen mit dem Gehäuseoberteil 14 eine Filtervorrichtung 15.

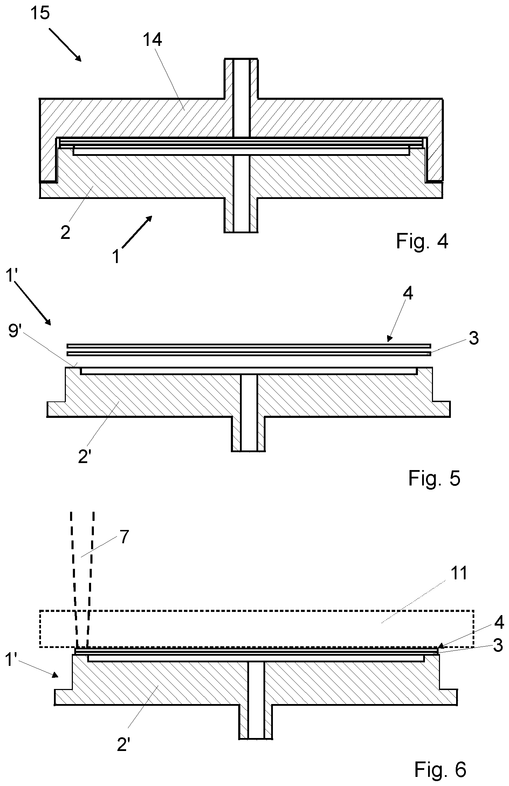

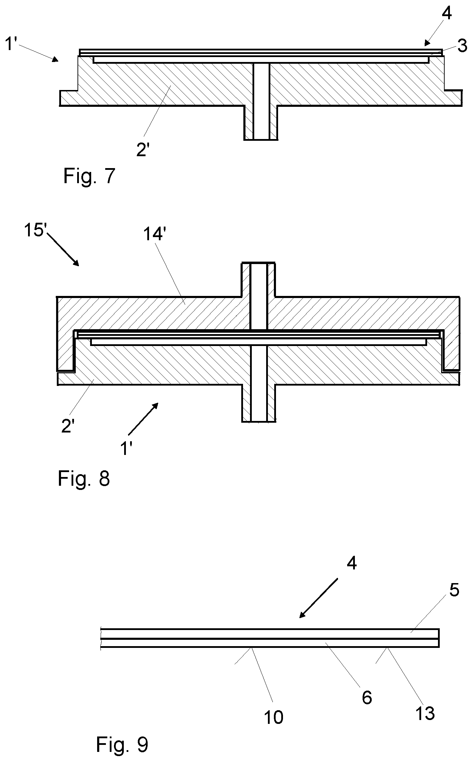

Entsprechend dem Ausführungsbeispiel der Figuren 5 bis 8 ist das Gehäuseunterteil 2' der Vorrichtung 1' aus einem Absorber enthaltenden Kunststoff ausgebildet, der das Laserlicht 7 absorbiert. Dadurch kann auf die Absorptionsfolie 8 verzichtet werden. Zur Herstellung der Vorrichtung 1' wird auf dem Auflagerand 9' des Gehäuseunterteils 2' das Vlies 3 ausgesetzt. Auf das Vlies 3 wird der Filter 4 an seiner Unterseite 10 so aufgesetzt, dass das Verstärkungsvlies 6 des Filters 4 auf der Oberseite 12 des Vlieses 3 aufliegt. Der Filter 4 und das Gehäuseunterteil 2' werden wie oben geschildert durch Laserschweißen miteinander dicht verbunden. Die Vorrichtung 1' wird anschließend mit dem Gehäuseoberteil 14' zu einer Filtervorrichtung 15' verbunden.

Gemäß dem Ausführungsbeispielen ist das Verstärkungsvlies 3 der Filtermembran 5 aus Polypropylen ausgebildet. Das Gehäuseunterteil 2, 2' ist in den Ausführungsbeispielen aus Polystyrol ausgebildet. Für das hochschmelzende Vlies 3 können beispielsweise Polyetheretherketon oder Polyphenylensulfid oder Polyamide oder Polyetherimid oder Polyethylenterephthalat verwendet werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 1, 1': Vorrichtung
- 2, 2': Gehäuseunterteil
- 3: Vlies
- 4: Filter
- 5: Filtermembran von 4
- 6: Verstärkungsvlies von 4
- 7: Laserlicht
- 8: Absorptionsfolie
- 9, 9': Auflagerand von 2
- 10: Unterseite von 4
- 11: Niederhalter
- 12: Oberseite von 3
- 13: Randbereich von 4
- 14, 14': Gehäuseoberteil
- 15, 15': Filtervorrichtung

## Patentansprüche

1. Vorrichtung (1, 1') mit einem Gehäuseunterteil (2, 2') und mit einem Filter (4), wobei der Filter (4) mindestens in einem Teil des Randbereiches (13) auf seiner dem Gehäuseunterteil (2, 2') zugewandten Unterseite (10) durch Laserschweißen dicht mit dem Gehäuseunterteil (2, 2') verbunden ist, und wobei der Filter (4) als eine Filtermembran (5) ausgebildet ist, die an der Unterseite (10) durch ein Verstärkungsvlies (6) verstärkt ist, wobei das Verstärkungsvlies (6) schmelzbar ist, wobei das Verstärkungsvlies (6) der Filtermembran (5) und das Gehäuseunterteil (2, 2') aus zum direkten Laserschweißen unverträglichen Kunststoffen ausgebildet sind, wobei zwischen dem schmelzbaren Verstärkungsvlies (6) und dem Gehäuseunterteil (2, 2') ein hochschmelzendes Vlies (3), das die Filtermembran (5) mit einem Auflagerand (9) des Gehäuseunterteils (2, 2') verbindet, angeordnet ist, und wobei das Gehäuseunterteil (2, 2') mindestens in einem Teil des Auflagerandes (9, 9') zur Filtermembran (5) hin Laserlicht (7) absorbierend ausgebildet ist.

2. Vorrichtung nach Anspruch 1,
**dadurch gekennzeichnet,**
**dass** dem Gehäuseunterteil (2) eine Laserlicht (7) absorbierende Schicht zur Filtermembran (5) hin vorgelagert ist.

3. Vorrichtung nach Anspruch 2,
**dadurch gekennzeichnet,**
**dass** die Laserlicht (7) absorbierende Schicht als eine Absorptionsfolie (8) ausgebildet ist.

4. Vorrichtung nach Anspruch 1,
**dadurch gekennzeichnet,**
**dass** das Gehäuseunterteil (2') aus einem Absorber enthaltenden Kunststoff ausgebildet ist, der Laserlicht (7) absorbiert.

5. Vorrichtung nach einem der Ansprüche 1 bis 4,
**dadurch gekennzeichnet,**
**dass** das hochschmelzende Vlies (3) aus Polyetheretherketon oder Polyphenylensulfid oder Polyamide oder Polyetherimid oder Polyethylenterephthalat ausgebildet ist.

6. Vorrichtung nach einem der Ansprüche 1 bis 5,
**dadurch gekennzeichnet,**
**dass** das Verstärkungsvlies (6) der Filtermembran (5) aus Polypropylen ausgebildet ist.

7. Vorrichtung nach einem der Ansprüche 1 bis 6,
**dadurch gekennzeichnet,**
**dass** das Gehäuseunterteil (2, 2') aus Polystyrol ausgebildet ist.

8. Verfahren zum Verbinden eines Gehäuseunterteils (2, 2') mit einem als eine Filtermembran (5) ausgebildeten Filter (4), der an seiner Unterseite (10) durch ein Verstärkungsvlies (6) verstärkt ist, und einen umlaufenden Randbereich (13) aufweist, wobei der Filter (4) mit seinem Randbereich (13) auf einen Auflagerand (9) des Gehäuseunterteils (2, 2'), das mindestens im Bereich seines Auflagerandes (9, 9') zum Filter (4) hin Laserlicht (7) absorbierend ausgebildet ist, aufgesetzt und in einer Spannvorrichtung mit einem transparenten Niederhalter (11) zusammengepresst wird um anschließend den Randbereich (13) des Filters (4) durch Laserschweißen dicht mit dem Auflagerand (9, 9') des Gehäuseunterteils (2, 2') zu verbinden, wobei zwischen dem Verstärkungsvlies (6), das schmelzbar ist, und dem Gehäuseunterteil (2, 2') ein hochschmelzendes Vlies (3) eingelegt wird und wobei während des Laserschweißens die zu beiden Seiten des Vlieses (3) anliegenden Schichten, die aus zum direkten Laserschweißen unverträglichen Kunststoffen ausgebildet sind, angeschmolzen und in das Vlies (3) eingedrückt werden.

9. Verfahren nach Anspruch 8,
**dadurch gekennzeichnet,**
**dass** bei für Laserlicht (7) transparentem Gehäuseunterteil (2) dem Gehäuseunterteil (2) eine Laserlicht (7) absorbierende Schicht zum Filter (4) hin vorgelagert wird.

10. Verfahren nach Anspruch 9,
**dadurch gekennzeichnet,**
**dass** als Laserlicht (7) absorbierende Schicht eine Absorptionsfolie (8) zum Filter (4) hin dem Gehäuseunterteil (2) vorgelagert wird.

## Claims

1. A device (1, 1') comprising a lower housing part (2, 2') and a filter (4), wherein the filter (4) is tightly connected to the lower housing part (2, 2') by means of laser welding at least in a part of the edge region (13) on the underside (10) of the filter facing the lower housing part (2, 2'), and wherein the filter (4) is designed as a filter membrane (5), which is reinforced on the underside (10) by means of a reinforcing nonwoven (6),
wherein the reinforcing nonwoven (6) is meltable,
wherein the reinforcing nonwoven (6) of the filter membrane (5) and the lower housing part (2, 2') are made of plastics that are incompatible for direct laser welding, wherein a high-melting nonwoven (3), which connects the filter membrane (5) to a support edge (9) of the lower housing part (2, 2'), is arranged between the meltable reinforcing nonwoven (6) and the lower housing part (2, 2'), and
wherein the lower housing part (2, 2') is designed to absorb laser light (7) at least in a part of the support edge (9, 9') toward the filter membrane (5).

2. The device according to claim 1,
**characterized in that**
a layer designed to absorb laser light (7) is arranged in front of the lower housing part in the direction of the filter membrane (5).

3. The device according to claim 2,
**characterized in that**
the layer designed to absorb laser light (7) is structured as an absorptive layer (8).

4. The device according to claim 1,
**characterized in that**
that the lower housing part (2') is made of plastic containing an absorber, which absorbs laser light (7).

5. The device according to any of claims 1 to 4,
**characterized in that**
the high-melting nonvowen (3) is made of polyetheretherketone or polyphenylene sulfide or polyamide or polyetherimide or polyethylene terephthalate.

6. The device according to any of claims 1 to 5,
**characterized in that**
the reinforcing nonwoven (6) of the filter membrane (5) is made of polypropylene.

7. The device according to any of claims 1 to 6,
**characterized in that**
the lower housing part (2, 2') is made of polystyrene.

8. Method to connect a lower housing part (2, 2') with a filter (4) designed as a filter membrane (5) which is reinforced on its underside (10) by a reinforcing nonwoven (6) and has a circumferential edge region (13), wherein the filter (4) with its edge region (13) is arranged on a support edge (9) of the lower housing part (2, 2') which, at least in the region of its support edge (9, 9') in the direction of the filter (4), is designed to absorb laser light (7), and is compressed with a transparent pad (11) in a tensioning device in order to then connect the edge region (13) of the filter (4) to the support edge (9, 9') of the lower housing part (2, 2') by means of laser welding,
wherein a high-melting nonwoven (3) is inserted between the reinforcing nonwoven (6), which is meltable, and the lower housing part (2, 2'), and
wherein during laser welding the layers, that are made of plastics that are incompatible for direct laser welding, abutting on both sides of the nonwoven (3), are fused to and pressed into the nonwoven (3).

9. The method according to claim 8,
**characterized in that**
for a laser light (7)-absorbing, transparent lower housing part (2), a laser light (7)-absorbing layer is arranged in front of the lower housing part in the direction of the filter (4).

10. The method according to claim 9,
**characterized in that**
the laser light (7) absorbing layer is an absorption foil (8) arranged in front of the lower housing part (2) in the direction of the filter (4).

## Revendications

1. Dispositif (1, 1') comprenant une partie inférieure de boîtier (2, 2') et un filtre (4), le filtre (4) étant relié à la partie inférieure de boîtier (2, 2') par soudage laser, de manière étanche, au moins dans une partie de la zone périphérique (13) sur la face inférieure (10) du filtre orientée vers la partie inférieure de boîtier (2, 2'), et le filtre (4) se présentant sous la forme d'une membrane filtrante (5), qui est renforcée sur la face inférieure (10) au moyen d'un non-tissé de renforcement (6),
le non-tissé de renforcement (6) étant fusible,
le non-tissé de renforcement (6) de la membrane filtrante (5) et la partie inférieure de boîtier (2, 2') étant constitués de matières plastiques ne se prêtant pas au soudage laser direct,
un non-tissé à point de fusion élevé (3), qui relie la membrane filtrante (5) et un bord d'appui (9) de la partie inférieure de boîtier (2, 2'), étant disposé entre le non-tissé de renforcement fusible (6) et la partie inférieure de boîtier (2, 2'), et
la partie inférieure de boîtier (2, 2') étant conçue de manière à absorber la lumière laser (7) au moins dans une partie du bord d'appui (9, 9') vers la membrane filtrante (5).

2. Dispositif selon la revendication 1,
**caractérisé en ce qu'**e
une couche conçue de manière à absorber la lumière laser (7) est disposée devant la partie inférieure de boîtier dans le sens de la membrane filtrante (5).

3. Dispositif selon la revendication 2,
**caractérisé en ce que**
la couche conçue de manière à absorber la lumière laser (7) a la structure d'une couche absorbante (8).

4. Dispositif selon la revendication 1,
**caractérisé en ce que**
la partie inférieure de boîtier (2') est constituée d'une matière plastique contenant un absorbeur qui absorbe la lumière laser (7).

5. Dispositif selon l'une quelconque des revendications 1 à 4,
**caractérisé en ce que**
le non-tissé à point de fusion élevé (3) est constitué de polyétheréthercétone ou polysulfure de phénylène ou polyamide ou polyétherimide ou polytéréphtalate d'éthylène.

6. Dispositif selon l'une quelconque des revendications 1 à 5,
**caractérisé en ce que**
le non-tissé de renforcement (6) de la membrane filtrante (5) est constitué de polypropylène.

7. Dispositif selon l'une quelconque des revendications 1 à 6,
**caractérisé en ce que**
la partie inférieure de boîtier (2, 2') est constituée de polystyrène.

8. Procédé permettant de relier une partie inférieure de boîtier (2, 2') avec un filtre (4) se présentant sous la forme d'une membrane filtrante (5) qui est renforcée sur sa face inférieure (10) par un non-tissé de renforcement (6) et qui a une zone périphérique (13) sur sa circonférence, le filtre (4) doté de sa zone périphérique (13) étant disposé sur un bord d'appui (9) de la partie inférieure de boîtier (2, 2') qui est conçue de manière à absorber la lumière laser (7) au moins dans une zone de son bord d'appui (9, 9') dans le sens du filtre (4), et qui est comprimée à l'aide d'un tampon transparent (11) dans un dispositif de tension afin de relier ensuite la zone périphérique (13) du filtre (4) et le bord d'appui (9, 9') de la partie inférieure de boîtier (2, 2') par soudage laser,
un non-tissé à point de fusion élevé (3) étant inséré entre le non-tissé de renforcement (6), qui est fusible, et la partie inférieure de boîtier (2, 2'), et
pendant le soudage laser, les couches qui sont constituées de matières plastiques ne se prêtant pas au soudage laser direct, et qui butent sur les deux côtés du non-tissé (3), étant réunies par fusion et pressées dans le non-tissé (3).

9. Procédé selon la revendication 8,
**caractérisé en ce que**
pour une partie inférieure de boîtier transparente (2) absorbant la lumière laser (7), une couche absorbant la lumière laser (7) est disposée devant la partie inférieure de boîtier dans le sens du filtre (4).

10. Procédé selon la revendication 9,
**caractérisé en ce que**
la couche absorbant la lumière laser (7) est une feuille d'absorption (8) disposée devant la partie inférieure de boîtier (2) dans le sens du filtre (4).
